Europäisches Patentamt

European Patent Office

Office européen des brevets

(19)

(11) Numéro de publication: **0 336 816**
A1

## (12) DEMANDE DE BREVET EUROPEEN

(21) Numéro de dépôt: 89400865.5

(22) Date de dépôt: 29.03.89

(51) Int. Cl.⁴: **F 28 D 15/02**
F 25 B 17/08, B 01 J 8/02

(30) Priorité: 30.03.88 FR 8804165

(43) Date de publication de la demande:
11.10.89 Bulletin 89/41

(84) Etats contractants désignés:
AT BE DE ES GB IT LU NL

(71) Demandeur: SOCIETE NATIONALE ELF AQUITAINE
Société anonyme dite
Tour Elf 2, Place de la Coupole La Défense 6
F-92400 Courbevoie (FR)

(72) Inventeur: Mauran, Sylvain
2, Rue de Théza
F-66000 Perpignan (FR)

Spinner, Bernard
11, Boulevard Kennedy
F-66000 Perpignan (FR)

Crozat, Georges
59, Rue Jules Béan
F-66000 Perpignan (FR)

Neveu, Pierre
3, Rue des Carmes
F-66000 Perpignan (FR)

(74) Mandataire: Timoney, Ian Charles Craig
SOCIETE NATIONALE ELF AQUITAINE Departement
Propriété Industrielle Tour Elf Cedex 45
F-92078 Paris La Défense (FR)

(54) Caloduc chimique, procédé de régénération d'un tel caloduc et utilisation de ce caloduc.

(57) Caloduc chimique caractérisé en ce qu'il comporte deux réactifs solides (A,B) susceptibles de donner lieu à une réaction réversible exothermique ou endothermique lorsqu'ils sont en présence de gaz, les solides étant mis en place dans un réservoir (1) unique séparé physiquement en deux compartiments (12, 14) par un troisième solide (13) isolant thermiquement mais susceptible d'être traversé par le gaz, chacun des compartiments contenant un des deux réactifs solides.

FIG_1

EP 0 336 816 A1

**Description**

## CALODUC CHIMIQUE, PROCEDE DE REGENERATION D'UN TEL CALODUC ET UTILISATION DE CE CALODUC

La présente invention concerne un caloduc chimique, son procédé de régénération et l'utilisation d'un tel caloduc.

Il existe des caloducs à fluide, constitués d'un tube dont la partie inférieure contient un fluide qui, mis en contact avec une source de chaleur, s'évapore vers la partie supérieure du tube elle même mise en contact avec une source de température plus froide, de façon à condenser dans cette partie supérieure la vapeur sous forme de fluide. Ce fluide retourne, par gravité ou capillaire, dans la partie inférieure du caloduc. De tels caloducs forment un système cyclique mais nécessitent un gradient de température pour fonctionner et, par ailleurs utilisent le phénomène de gravité. De plus les dimensions et les caractéristiques du fluide sont calculées pour évacuer une puissance calorifique déterminée.

Un premier but de l'invention est de proposer un caloduc chimique pouvant fonctionner dans n'importe quelle position et dont la puissance soit modulable.

Ce premier but est atteint par le fait que le caloduc chimique comporte deux réactifs solides susceptibles de donner lieu à une réaction réversible exothermique ou endothermique lorsqu'ils sont en présence de gaz, les solides étant mis en place dans un réservoir unique, séparé physiquement en deux compartiments par un troisième solide isolant thermiquement et susceptible d'être traversé par le gaz, chacun des compartiments contenant un des deux réactifs solides.

Selon une autre caractéristique, le réservoir est tubulaire et comporte au niveau de chaque compartiment contenant chacun des deux solides, des moyens permettant d'effectuer des échanges de chaleur.

Selon une autre caractéristique, le caloduc comporte un robinet ou une vanne mettant en communication les deux compartiments.

Selon une autre caractéristique, le caloduc chimique comporte un circulateur.

Selon une autre caractéristique, les réactifs solides du caloduc déclenchent avec le gaz des processus physico-chimiques présent dans le diagramme de clapeyron des courbes qui se croisent dans le domaine de température mis en oeuvre.

Selon une autre caractéristique, les courbes dans le diagramme de clapeyron sont parallèles dans le domaine de température mis en oeuvre.

Selon une autre caractéristique, les réactifs solides sont constitués d'un mélange de sel pulvérulent avec un produit expansé bon conducteur thermique.

Selon une autre caractéristique, les réactifs solides sont constitués d'un mélange de sel pulvérulent de granulométrie calibrée avec un produit expansé bon conducteur thermique et un deuxième produit expansé isolant thermiquement dans des proportions inférieures au premier produit expansé.

Un deuxième but de l'invention est de proposer un procédé de régénération de ces caloducs chimiques.

Ce but est atteint par le fait que le procédé de régénération consiste dans un caloduc où les processus physico-chimiques sur les sels s'opèrent à la même pression en une inversion du sens des échanges thermiques.

Selon une autre caractéristique ce but est atteint par le fait que la régénération est obtenue, dans un calodcuc où les processus physico-chimiques sur les sels s'opèrent à la même température, en créant une dépression sur un premier compartiment et une surpression sur l'autre compartiment.

Un troisième but de l'invention est de proposer des méthodes d'utilisation de ce type de caloduc.

Ce but est atteint par le fait que l'on utilise ce caloduc en alimentant par une source de chaleur un compartiment contenant un premier mélange réactif (B) produisant dans une réaction endothermique une désorption et le deuxième compartiment contenant un deuxième mélange réactif (A) produisant une réaction exothermique par absorption du gaz, cette réaction permettant une récupération de chaleur à une température supérieure à la température de source et en ce que la régénération s'effectue par inversion des échanges thermiques et alimentation du second mélange par la source de chaleur pour produire par une réaction endothermique de désorption un gaz et absorption de ce gaz avec le premier mélange dans le premier compartiment par une réaction exothermique avec évacuation de la chaleur à un niveau de température plus bas que la source de chaleur.

Une autre utilisation consiste à produire du froid par une réaction endothermique réversible monovariante d'un premier mélange solide réactif (B) et par une réaction exothermique pour un second mélange solide réactif (A) avec évacuation à une température intermédiaire entre la température de source et la température de milieu de production du froid, puis régénération par inversion des échanges thermiques pour provoquer une réaction endothermique du second mélange solide réactif (A) alimenté à la température de source et une réaction exothermique du premier mélange solide réactif (B) avec évacuation à une température intermédiaire.

Une autre utilisation consiste à produire pour des diagrammes à courbes croisées une réaction exothermique pour le second mélange solide réactif (A) alimenté à la température de source avec une réaction endothermique pour le premier mélange solide réactif (B) avec évacuation à température plus basse que la température de source et régénération par inversion des échanges thermiques pour provoquer une réaction exothermique par alimentation du premier mélange solide réactif (B) par la température de source et une réaction endothermique pour le second mélange solide réactif (A).

Une autre utilisation pour caloduc à courbes croisées consiste à effectuer une réaction thermique par alimentation du second mélange solide (A) à une température de source inférieure à la température de croisement des droites et une réaction exothermique pour le premier mélange solide (B) à un niveau de température plus élevé et régénération par action endothermique par alimentation du premier mélange solide (B) à la température de source et réaction exothermique du second mélange solide (A) à une température plus basse que la température de source.

Une autre utilisation du caloduc à courbes croisées consiste à produire une réaction endothermique par alimentation du second mélange solide (A) à une température de source supérieure à la température de croisement et une réaction exothermique du premier mélange solide (B) à une température inférieure à la température de source puis régénération par réaction endothermique du premier mélange solide (B) par alimentation de ce dernier à la température de source et évacuation à une température supérieure à la température de source par réaction exothermique du second mélange (A).

Les utilisations ci-dessus permettent de pouvoir transférer et remonter de la chaleur à des niveaux de températures variables et la régénération peut se faire par une inversion des échanges thermiques.

Un autre but est de prévoir des utilisations pour transférer ou remonter de la chaleur avec régénération par variation de pression.

Ce but est atteint par le fait que l'utilisation consiste, dans une phase de régénération, à comprimer les compartiments contenant le sel (B) puis déprimer le compartiment contenant le sel (A) et, dans une phase d'utilisation, à faire absorber par le sel (A) le gaz dans une réaction exothermique à la température ordinaire (To) et faire désorber le gaz par le sel (B) dans une réaction endothermique pour produire du froid.

Selon une autre caractéristique, l'utilisation consiste, dans une phase de régénération, à comprimer le compartiment contenant le sel (B) puis à déprimer le compartiment contenant le sel (A) et, dans une phase d'utilisation, à faire désorber le gaz par le sel (B) dans une réaction endothermique à la température ordinaire (To) et à faire absorber le gaz par le sel (A) dans une réaction exothermique à une température (Th) supérieure à la température ordinaire (To).

Selon une autre caractéristique, l'utilisation consiste, dans une phase de régénération, à déprimer le compartiment contenant le sel (B) et à comprimer le compartiment contenant le sel (A) puis, dans une phase d'utilisation, à faire désorber le sel (A) dans une réaction endothermique à la température ordinaire (To) et à faire absorber le sel (B) dans une réaction exothermique à une température (Te) d'évacuation inférieure à la température ordinaire (To).

Selon une autre caractéristique, l'utilisation consiste, dans une phase de régénération, à déprimer le compartiment contenant le sel (B) et à comprimer le compartiment contenant le sel (A) puis, dans une phase d'utilisation, à faire désorber le sel (B) dans une réaction endothermique à une température ordinaire (To) inférieure à la température de croisement (Tc) et à faire absorber le sel (A) dans une réaction exothermique à une température plus basse (Tb) inférieure à la température ordinaire (To).

Selon une autre caractéristique, l'utilisation consiste, dans une phase de régénération à déprimer le compartiment contenant le sel (B) et à comprimer le compartiment contenant le sel (A) puis à faire absorber le sel (A) dans une réaction endothermique à une température ordinaire (To) supérieure à la température de croisement (Tc) des courbes et à faire désorber le sel dans une réaction exothermique à une température plus basse (Tb) inférieure à la température ordinaire (To).

Selon une autre caractéristique, l'utilisation consiste, dans une phase de régénération à déprimer le compartiment contenant le sel (B) et à comprimer le compartiment contenant le sel (A) puis dans une phase d'utilisation à faire absorber le sel (B) dans une réaction exothermique à une température ordinaire (To) inférieure à la température de croisement (Tc) et à faire désorber le sel (A) dans une réaction endothermique pour produire du froid.

Selon une autre caractéristique, l'utilisation consiste, dans une phase de régénération à comprimer le compartiment contenant le sel (B) et à déprimer le compartiment contenant le sel (A) puis dans une phase d'utilisation à faire désorber le sel (B) dans une réaction endothermique à une température ordinaire (To) supérieure à la température de croisement (Tc) et à faire absorber le sel (A) dans une réaction exothermique à une température plus élevée (Th) supérieure à la température ordinaire (To).

Selon une autre caractéristique, l'utilisation consiste, dans une phase de régénération, à déprimer le compartiment contenant le sel (B) et à comprimer le compartiment contenant le sel (A) puis, dans une phase d'utilisation, à faire absorber le sel (B) dans une réaction exothermique à une température d'évacuation (Te) inférieure à la température de croisement et inférieure à la température ordinaire (To) et à faire désorber le sel (A) dans une réaction endothermique pour produire du froid.

Un autre but de l'invention est la constitution d'un caloduc chimique continu.

Ce dernier but est atteint par le fait que le caloduc chimique continu consiste à utiliser au moins deux caloducs dont chacun d'eux est constitué d'un caloduc conforme à un des modes de réalisation ci-dessus selon un mode d'utilisation ci-dessus, l'un des caloducs étant employé dans la phase d'utilisation pendant que l'autre est employé en phase de régénération.

D'autres avantages apparaîtront plus clairement à la lecture de la description ci-après faite en référence aux dessins annexés dans lesquels :

- la figure 1 représente une vue schématique d'un caloduc chimique selon un premier mode de réalisation;

- la figure 2 représente un deuxième mode de réalisation d'un caloduc chimique ;

- la figure 3 représente un premier type d'utilisation d'un caloduc à courbes parallèles avec régénération par inversion des échanges thermiques;

- la figure 3A représente un deuxième mode de régénération par inversion des échanges thermiques;

- la figure 3B représente un troisième mode de régénération par inversion des échanges thermiques;

- les figures 3C et 3D représentent différents modes de réalisation pour assurer des échanges thermiques;

- la figure 4 représente un deuxième type d'utilisation d'un caloduc à courbes parallèles avec régénération par inversion des échanges thermiques;

- la figure 5 représente un premier type d'utilisation d'un caloduc à courbes croisées avec régénération par inversion des échanges thermiques ;

- la figure 6 représente un deuxième type d'utilisation d'un caloduc à courbes croisées avec régénération par inversion des échanges thermiques ;

- la figure 7 représente un troisième type d'utilisation de caloduc à courbes croisées avec régénération par inversion des échanges thermiques ;

- la figure 8 représente un premier type d'utilisation de caloduc à courbes parallèles avec régénération par variation de pression ;

- la figure 9 représente un deuxième type d'utilisation de caloduc à courbes parallèles avec régénération par variation de pression ;

- la figure 10 représente un troisième type d'utilisation de caloduc régénéré par variation de pression et à courbes parallèles

- la figure 11 représente un premier type d'utilisation de caloduc régénéré par variation de pression et à courbes croisées ;

- les figures 12 à 17 représentent respectivement un deuxième, troisième, quatrième, cinquième, sixième, septième types d'utilisation d'un caloduc à courbes croisées régénéré par variation de pression ;

- la figure 18 représente un mode de constitution d'un caloduc chimique continu et son utilisation selon un mode d'utilisation des figures précédentes.

- la figure 19 représente un deuxième mode de constitution d'un caloduc chimique continu et son utilisation selon un mode d'utilisation des figures précédentes.

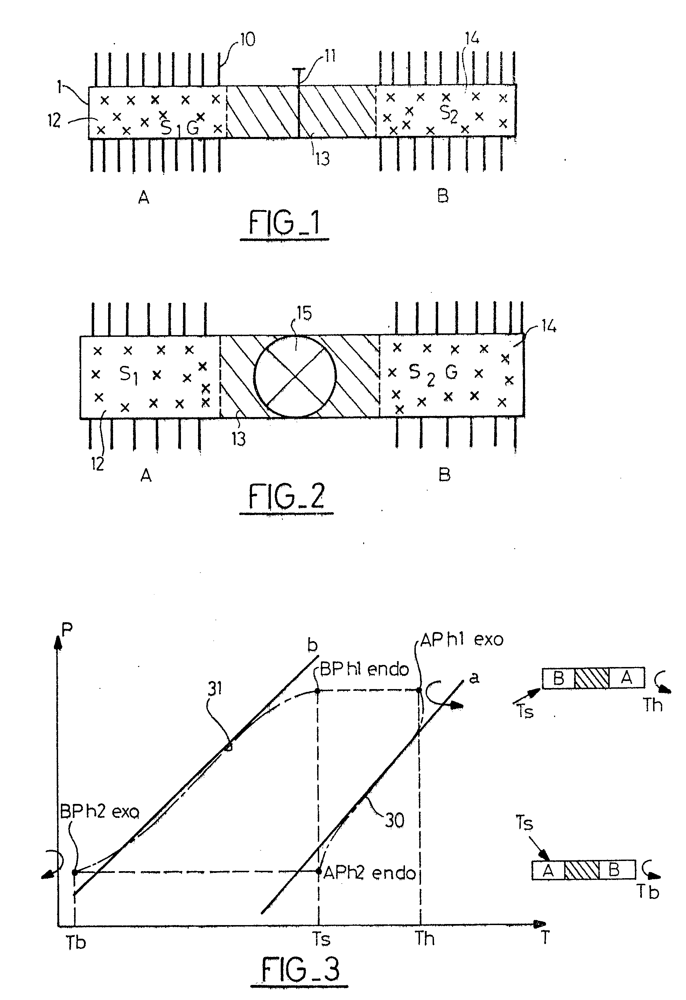

La figure 1 représente une première variante de réalisation du caloduc chimique constitué d'un réservoir (1), par exemple de forme cylindrique et tubulaire. Ce réservoir en matériau bon conducteur de chaleur peut éventuellement comporter des ailettes (10), le volume de ce réservoir est partagé en deux compartiments (12), respectivement (14) par un compartiment (13) éventuellement formé à chaque extrémité par des grilles ou tout dispositif permettant de retenir des sels (S16, S2) dans leurs compartiments respectifs. Ce compartiment (13) contient un solide poreux isolant thermiquement mais laissant passer le gaz nécessaire aux réactions physico-chimiques. Un tel solide peut être constitué, à titre d'exemple par de la vermiculite ou tout autre produit ayant des propriétés similaires de porosité aux gaz et d'isolant. Dans le premier compartiment par exemple, on placera un réactif solide (S1G) qui se décomposera dans une réaction endothermique réversible en un solide (S1) et un gas (G). Dans le deuxième compartiment (14), on placera un autre réactif solide (S2) qui se combinera avec le gaz (G) pour produire, dans une réaction exothermique le réactif solide de (S2G). A titre d'exemple non limitatif, le premier réactif pourra être du chlorure de calcium ammoniaqué $CACL2,8NH3$ produisant de l'ammoniaque et du chlorure de calcium et le deuxième réactif pourra être du chlorure de barium se combinant dans une réaction exothermique avec l'ammoniaque pour former du chlorure de barium ammoniaqué $BACL2, 8NH3$.

Pour de plus amples détails sur la constitution des milieux réactionnels utilisables dans un tel caloduc chimique, on se reportera aux sels et aux gaz mentionnés dans la demande de brevet français 87 12 389 déposée au nom de la SOCIETE NATIONALE ELF AQUITAINE le 7 Septembre 1987.

De plus, ces réactifs solides pourront être constitués de façon avantageuse d'un mélange de sel pulvérulent tels que ceux mentionnés ci-dessus ou dans la demande FR 87 12 389 avec un premier produit expansé bon conducteur thermique tel que du graphite expansé et éventuellement un deuxième produit expansé isolant thermiquement, tel que de la vermiculite, mais dans des proportions inférieures au premier produit expansé. Pour de plus amples détails sur les produits expansés utilisables et les proportions de mélange on pourra se reporter à la demande de brevet français intitulée "Procédé d'amélioration des caractéristiques d'absorption et de désorption d'un gaz par un milieu réactionnel" et déposée au nom de S.N.E.A.

De façon facultative, le caloduc de la figure 1 peut comprendre un robinet ou une vanne (11) disposé dans le compartiment (13). Ce robinet (11) est ouvert, lors de la première mise en service, pour mettre en communication les compartiments contenant les réactifs (A) et (B).

La figure 2 représente un deuxième mode de réalisation d'un caloduc chimique selon l'invention se distinguant de celui de la figure 1 par le fait que le compartiment (13) comporte, en lieu et place du robinet (11), un circulateur (15) dont le but est de faire varier la pression du gaz dans les compartiments (12,14) afin de permettre une régénération et une utilisation selon les modes que l'on verra ultérieurement.

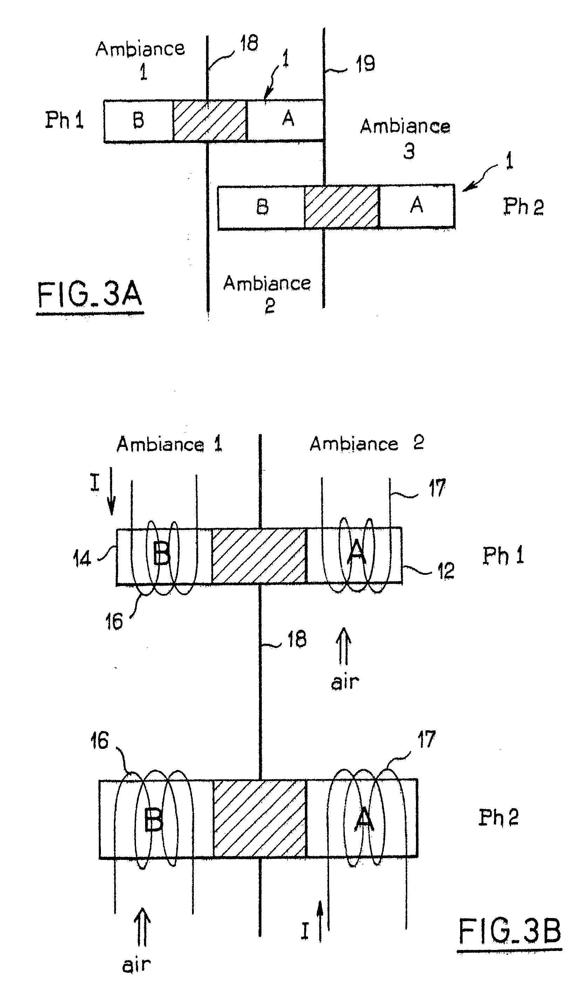

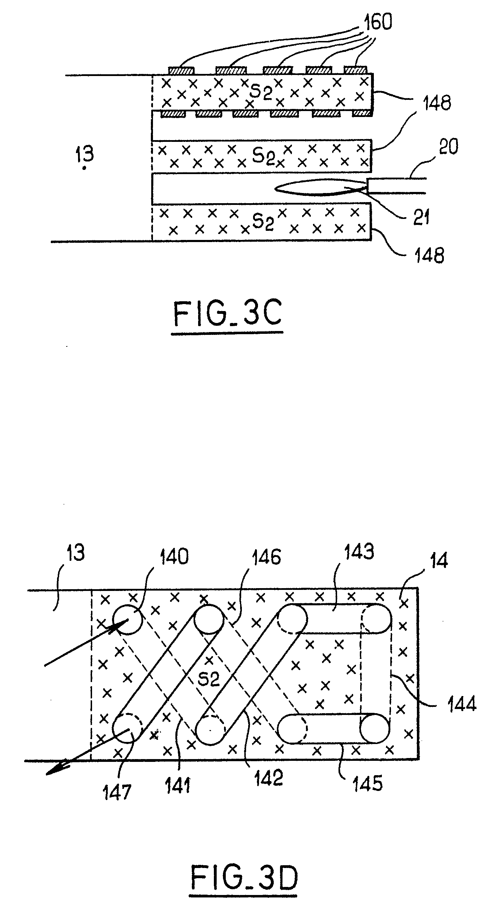

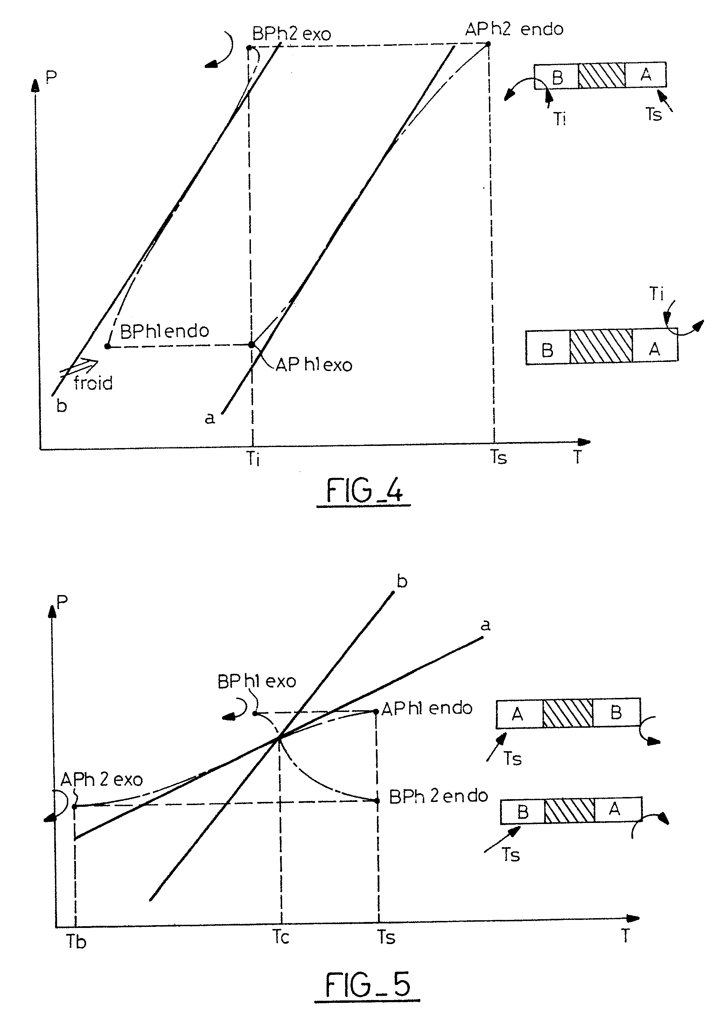

Les figures 3,4 représentent, dans un diagramme de clapeyron, deux modes différents d'utilisation du caloduc correspondant au premier mode de réalisation avec une régénération par retournement du caloduc comme représenté aux figures 3, 4 à hauteur des phases 1 (Ph1) et des phases 2 (Ph2). Dans le diagramme, les droites (a) et (b) représentent les courbes d'équilibre physico-chimiques des sels (A) et (B). La figure 3 représente un mode d'utilisation permettant d'effectuer un transfert de calories d'un niveau de température donné (TS) vers un niveau de température supérieur (TH).

Pour ce faire on alimente le sel (B) avec la source de chaleur (Ts) pour provoquer sa décomposition dans une réaction endothermique et le sel (A) absorbe le gaz selon une réaction exothermique, comme représenté à la figure 3 au point dénommé BPh1 et APh1. A la phase 1 succède une deuxième phase dite phase de régénération dans laquelle on retourne le caloduc et on alimente le compartiment contenant le sel (A) avec la source de chaleur (Ts) de façon à provoquer une décomposition selon une réaction endothermique dont le point de fonctionnement est représenté par (APh2). Cette réaction d'effectue à pression constante et est accompagnée pour le sel (B) d'une réaction exothermique représentée par le point de fonctionnement (BPh2)provoquant l'absorption du gaz. Cette réaction exothermique évacue de la chaleur à un niveau de température inférieur à la température de source, comme le montre le point (BPh2). Les courbes (30) et (31) représentent les trajectoires thermodynamiques suivies par les deux sels (A) et (B) entre le fonctionnement en phase 1 et le fonctionnement en phase 2.

Les figures 3A et 3B représentent deux modes de régénération du caloduc équivalent au mode par retournement. Ces modes de régénération constituent, comme pour le retournement, à inverser le sens des échanges thermiques.

Ainsi, à la figure 3A, le sel (B) est à la phase (Ph1) dans une ambiance 1, source de chaleur et les échanges avec le sel (B) se font selon une réaction endothermique. Le sel (A) se trouve dans une ambiance 2 séparée de l'ambiance 1 par une cloison (18) thermiquement étanche. Comme représenté sur le diagramme de Clapeyron, dans la phase (Ph1) les échanges entre le sel (A) et l'ambiance 2, puits de chaleur, se font selon une réaction exothermique. La phase de régénération du caloduc (1) est représentée par la phase (Ph2) et le caloduc (1) a été translaté de façon à placer le compartiment contenant le sel (B) dans l'ambiance 2, puits de chaleur, et à placer le compartiment contenant le sel (A) dans une troisième ambiance 3, source de chaleur.

Dans la phase de régénération (Ph2), les échanges avec le sel (B) se font selon une réaction exothermique et les échanges avec le sel (A) selon une réaction endothermique. Bien évidemment, les ambiances 2 et 3 sont également séparées par une cloison (19) thermiquement isolante. Les rôles des ambiances opposées entre les ambiances 1, 7 et l'ambiance 2 seront inversés selon le type de fonctionnement choisi (réaction exothermique à la place d'une réaction endothermique et vice-versa).

La figure 3B représente un autre mode de régénération appliqué au fonctionnement de la figure 3 pour un caloduc (1) comprenant des moyens producteurs de chaleur (10, 17) en contact avec les compartiments (12, 14). Dans la phase (1) le sel (B) reçoit la chaleur des moyens producteurs de chaleur (16) et le sel (A) situé dans l'ambiance 2 évacue la chaleur dans un courant d'air tandis que les moyens producteurs de chaleur (17) sont inactifs. Dans la phase (Ph2) de régénération du caloduc le sel (B), situé dans l'ambiance 1, évacue la chaleur dans un courant d'air et les moyens producteurs de chaleur (16) sont inactifs. Par contre les moyens producteurs de chaleur (17) sont actifs.

Les moyens producteurs de chaleur (16, 17) peuvent être constitués par des résistances électriques alimentées selon les besoins en courant ou par des canalisations alimentées ou non par des fluides chauds.

Ces moyens producteurs de chaleur (16, 17) peuvent, soit entourer les compartiments de sel (A, B), soit circuler à l'intérieur de ceux-ci.

Dans la suite du texte, lorsque l'on mentionne une régénération par retournement, il est bien clair que l'on doit comprendre que l'un quelconque des modes de régénération exposés ci-dessus peut être substitué, ces modes de régénération consistant tous à inverser le sens des échanges thermiques.

La figure 3D représente un compartiment (14) du caloduc dans lequel circulent des tubes (140 à 147) à l'intérieur desquels une circulation d'un fluide est assurée pour permettre un échange au coeur de la masse de sel (B). Le fluide entre, par exemple, en (140) et ressort en (147).

La figure 3C représente différents modes de réalisation des compartiments du caloduc contenant un sel, en l'occurrence le compartiment (14) du sel (S2). Ce compartiment peut être constitué d'un ensemble de tubes fins dans lesquels on met le sel (S2). Ces tubes peuvent être disposés selon des directions parallèles au cylindre (13), ou de façon à former une étoile ou éventail, ou encore selon une surface perpendiculaire à l'axe du cylindre (13).

Les apports de chaleur peuvent, par exemple, être assurés par une résistance électrique (160) enroulée autour du ou des tubes (148) ou par un brûleur (20) dont la flamme (21) assure l'apport de chaleur.

Le deuxième mode d'utilisation représenté à la figure 4 permet de produire du froid avec le sel (B). Cette production s'effectue par intermittence, comme on va le voir, mais il suffira de disposer de deux caloducs pour obtenir la continuité de production. Dans la première phase le sel (B), dans une réaction endothermique de désorption, absorbe des calories et produit donc du froid. Pendant ce temps, le gaz produit par la désorption est absorbé par le sel (A) dans une réaction exothermique et la chaleur est évacuée à une température intermédiaire (Ti).

Dans un deuxième temps, représenté par la phase 2, le caloduc est retourné et le sel (A) est alimenté à la température de la source, de façon à produire une réaction de désorption endothermique. Pendant ce temps, le gaz libéré est absorbé par le sel (B) dans une réaction d'absorption exothermique où l'évacuation s'effectue à une température intermédiaire (Ti).

La figure 5 représente une utilisation d'un caloduc à courbes croisées dans le diagramme de clapeyron permettant d'effectuer un transfert de calories d'un niveau de température (Ts) à un niveau plus bas, la température de source étant supérieure à la température de croisement (Tc) et la température basse (Tb) étant inférieure à la température de croisement (Tc). Pendant la première phase le sel (A) se décompose à la température de source (Ts), selon une réaction endothermique (APh1) et le sel (B) dans une réaction d'absorption exothermique(BPh1) évacue des calories à une température plus basse. Dans la deuxième phase le caloduc est retourné et le sel (B) est alimenté à la température de la source (Ts) selon une réaction de désorption endothermique (BPh2) et le sel (A) dans une réaction d'absorption exothermique (APh2) évacue les calories à une température plus basse (Tb), cette température étant inférieure à la température de croisement.

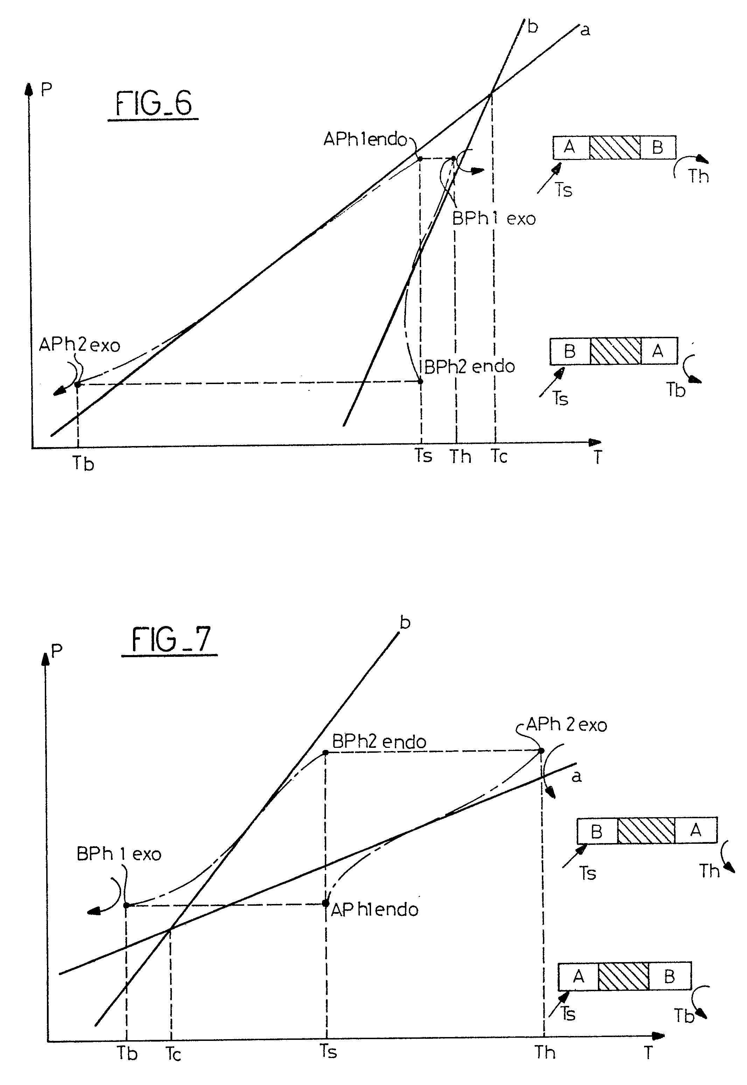

Dans un autre mode d'utilisation, représenté à la figure 6, on cherche à récupérer de la chaleur à un niveau de température plus élevé que la source alimentant le sel (A). Dans la première phase, le sel (A) se décompose en fournissant du gaz selon une réaction endothermique (APhI) et le sel (B) effectue une réaction exothermique (BPh1) d'absorption du gaz à un niveau de température (Th) plus élevé que le niveau de température de la source (Ts). Cette température de source (Ts) est à un niveau de température inférieure à la température de croisement (Tc). Dans la phase de régénération on retourne le caloduc et le sel (B) est alimenté à la température de source (Ts) pour accomplir une réaction de désorption endothermique (BPh2) tandis que le sel (A) absorbe le gaz dans une réaction exothermique (APh2) où l'évacuation de calories s'effectue à une température (Tb) plus basse que la température de source.

Dans le mode d'utilisation représenté à la figure 7 on effectue un transfert de calories d'un niveau de température (Ts) à un niveau de température plus élevé (Th), le niveau de température (Ts) étant supérieur à la température de croisement (Tc). Dans une première phase , le sel (A) est alimenté à la température source (Ts) pour provoquer une réaction endothermique (APh1) de désorption et le sel (B) absorbe le gaz dans une réaction exothermique (BPh1). Ensuite le caloduc est retourné et la source est appliquée au sel (B) pour provoquer une réaction endothermique (BPh2) de désorption qui sera accompagnée d'une réaction exothermique (APh2) d'absorption du gaz par le sel (A), cette réaction produisant sur (A) une température (Th) supérieure à la température de source.

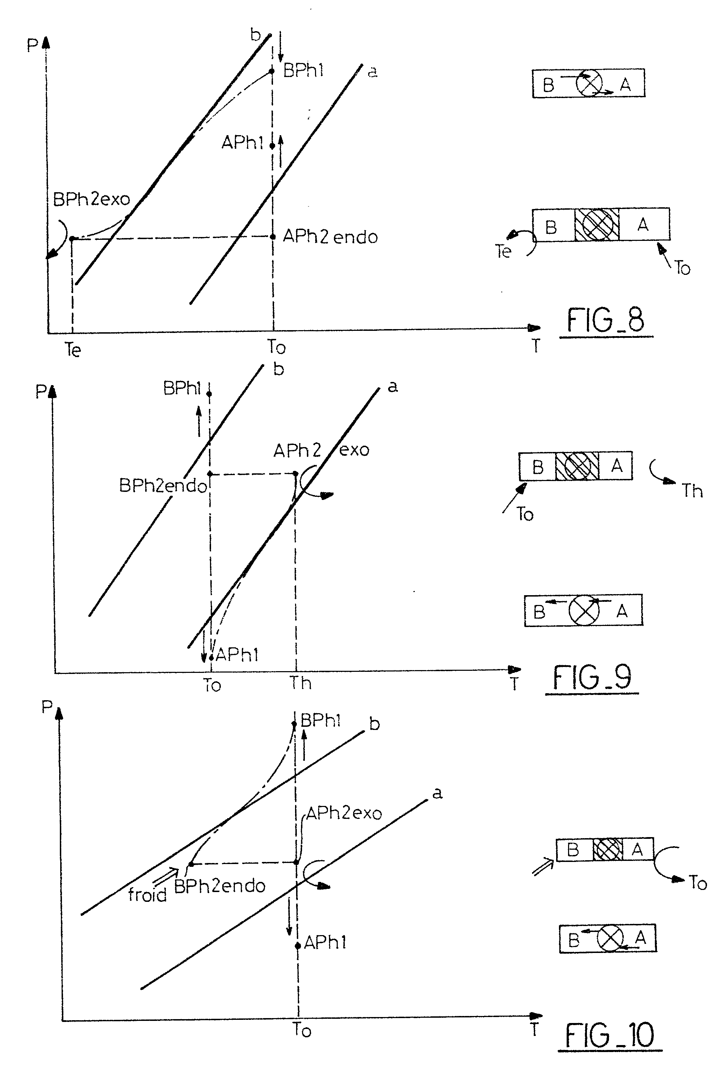

Les figures 8 à 17 représentent des modes d'utilisation du deuxième mode de réalisation du caloduc selon la figure 2. Ce caloduc dispose entre les sels (A) et (B) d'un circulateur ou compresseur . Sur la figure 8 dans la première phase on déprime le compartiment contenant le sel (B) pour l'amener au point (BPh1) et on comprime le compartiment contenant le sel (A) pour l'amener au point (APh1). Cette opération s'effectue à température ordinaire (To). Dans la deuxième phase le sel (A) est soumis à la température ordinaire, pour provoquer une réaction endothermique (APh2) de décomposition. Comme on travaille à pression constante dans le caloduc, le gaz circule du sel (A) vers le sel (B) qui l'absorbe dans une réaction exothermique (BPh2). Cette réaction est représentée par la courbe (80) et provoque une évacuation à une température (Te) plus basse que la température ordinaire (To).

La figure 9 représente un autre mode d'utilisation dans lequel la régénération s'effectue par une première phase dans laquelle on comprime le gaz dans le sel (B) et on déprime le gaz dans le compartiment du sel (A). Ceci est représenté par les points (BPh1) et respectivement (APh1) sur la figure 9. Ensuite on équilibre les pressions entre le sel (A) et (B) et on applique la température ordinaire au sel (B) tandis que le sel (A) suivant la courbe (91) va passer du point (APh1) au point (APh2) par une réaction exothermique d'absorption permettant de récupérer de la chaleur à une température (Th) plus élevée que la température ordinaire.

La figure 10 représente un mode d'utilisation dans lequel on produit du froid avec le compartiment contenant le sel (B). Dans une première phase on comprime le gaz contenu dans le compartiment (B) et on déprime le gaz contenu dans le compartiment (A) pour arriver au point (BPh1) et (APh1) à température ordinaire. Ensuite, lors de l'ouverture de la vanne (15), les pressions s'équilibrent et en appliquant la température ordinaire au sel du compartiment (A) qui absorbe du gaz dans une réaction exothermique qui l'amène au point (APh2). Le sel (B) désorbe du gaz selon une réaction endothermique qui l'amène au point (BPh2) se trouvant à une température inférieure à la température ordinaire. Dans cette utilisation, le compartiment (B) produit du froid.

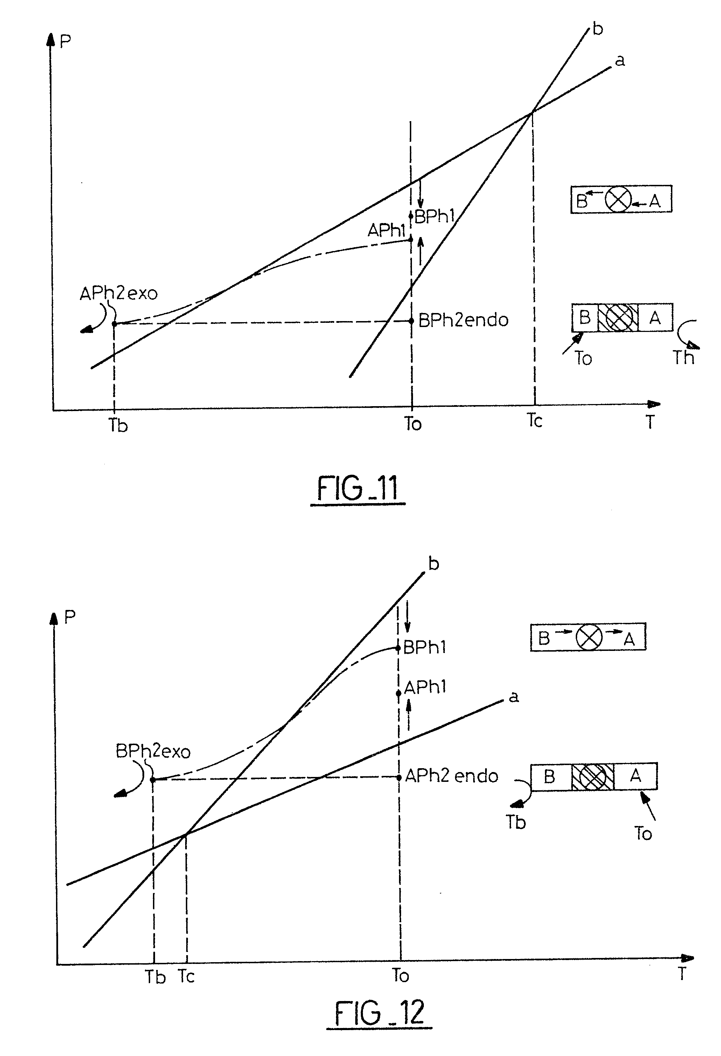

La figure 11 représente un mode d'utilisation d'un caloduc à courbe croisée et à circulateur, lorsque la température de fonctionnement (To) est inférieure à la température (Tc) de croisement des courbes. Dans une première phase on déprime le compartiment contenant le sel (B) et on comprime le gaz dans le compartiment contenant le sel (A). Puis, après avoir ouvert la vanne (15) et équilibré les pressions, on applique à (B) la température ordinaire (To) et le sel (A) va effectuer une réaction de d'absorption exothermique permettant d'évacuer de la chaleur à une température (Tb) plus basse que la température ordinaire.

La figure 12 représente une utilisation dans laquelle la température (To) à laquelle s'effectue la compression est située à droite de la température (Tc) de croisement des courbes d'équilibre dans le diagramme de clapeyron.

Dans la première phase dite de régénération on comprime le gaz contenu dans le compartiment (A) et on déprime le compartiment (B), de façon à se situer sur la figure 12 , respectivement aux points (APh1) et (BPh1). Ensuite, lors du fonctionnement du caloduc, on ouvre la vanne (15) de manière à équilibrer les pressions et on applique la température ordinaire (To) au sel (A) tandis que le sel (B) va absorber le gaz dans une réaction exothermique, de façon à évacuer les calories à une température (Tb) plus basse que la température ordinaire.

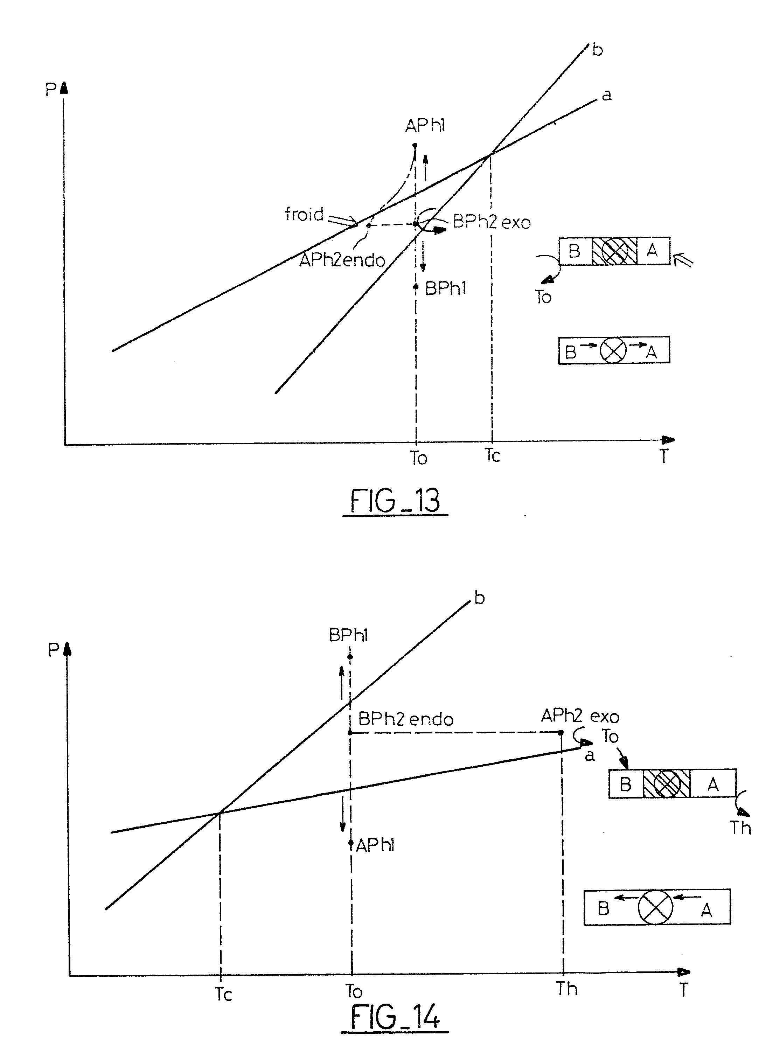

L'utilisation représentée à la figure 13 correspond au cas où la température de fonctionnement (To) est inférieure à la température de croisement (Tc) et dans ce cas la phase de régénération comprend une compression du gaz du compartiment (A) et une dépression du gaz du compartiment (B) représentée par les points (APh1) et (BPh1) sur cette figure.

Ensuite, la vanne (15) est ouverte et le sel (B) soumis à la température ordinaire effectue une réaction d'absorption exothermique tandis que le sel (A) effectue une réaction de désorption endothermique l'amenant au point (APh2) et permettant ainsi de produire du froid.

La figure 14 représente le cas où la température ordinaire est supérieure à la température (Tc). Dans une première phase de régénération on comprime (B) et on déprime (A) pour obtenir les points (BPh1) et (APh1) de la figure 14. Ensuite, on ouvre la vanne (15) et on applique la température ordinaire (To) au sel (B) pour le faire désorber dans une réaction endothermique. Le sel (A) se combine au gaz selon une réaction exothermique dont les calories seront évacuées à une température (Th) supérieure à la température ordinaire.

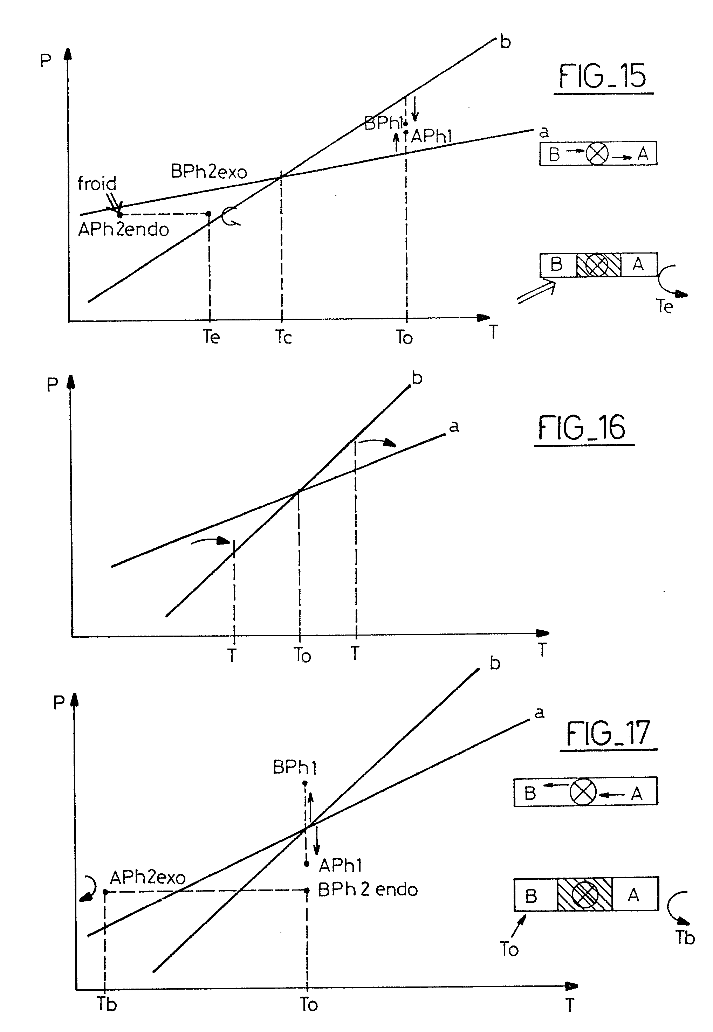

La figure 15 représente l'utilisation d'un caloduc pour produire du froid avec régénération par compression du compartiment (A) et dépression du compartiment (B) . Dans ce cas on doit disposer d'une évacuation possible de calories à une température (Te) d'évacuation inférieure à la température ordinaire (To), la température de croisement (Te) se situant entre ces deux températures. Après la phase de régénération représentée par les points (APh1) et (BPh1) par ouverture de la vanne on équilibre les pressions et le sel (A) produit du froid par une réaction de désorption endothermique alors que le sel (B) effectue une absorption exothermique.

Les figures 16 et 17 correspondent aux cas particuliers où les courbes se croisent à la température ordinaire. Dans la première phase on peut comprimer ou déprimer (A) et (B), ce qui conduit dans la phase 2, soit à monter la température, soit à produire du froid si l'on dispose d'un niveau de température (T1) respectivement (T2).

La figure 17 représente le cas dans lequel on ne dispose pas d'une autre source de température agissant comme température intermédiaire et dans ce cas, dans la phase de régénération on comprime (B) et on déprime (A) de manière à obtenir les points (BPh1) et (APh1), puis dans la phase d'utilisation, après ouverture de la vanne, le compartiment du sel (B) à température ordinaire désorbe le gaz dans une réaction endothermique et celui du sel (A) absorbe le gaz dans une réaction exothermique dont la chaleur est évacuée à une température (T) inférieure

.

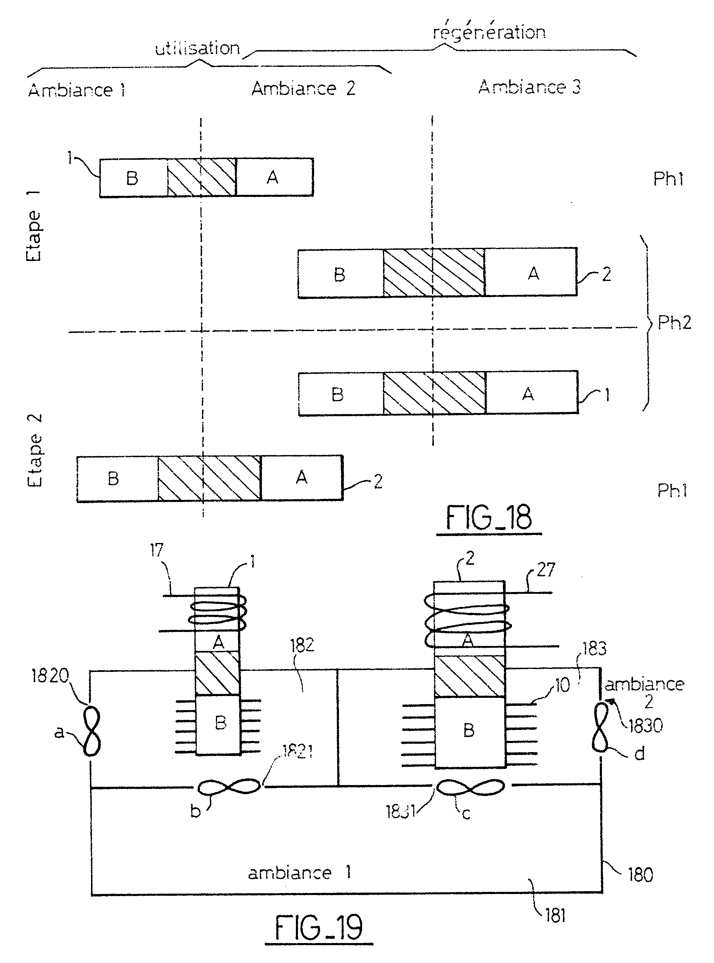

La figure 18 représente la réalisation d'un caloduc chimique continu par l'utilisation de deux caloducs (1, 2) dont le premier (1) dans la phase d'utilisation (Ph1) est placé dans les ambiances 1 et 2 tandis que le second caloduc (2) est dans sa phase de régénération (Ph2). Cette phase de régénération (Ph2) est obtenue en plaçant le caloduc (2) dans les ambiances 2 et 3. Ensuite, lorsque le caloduc (1) a besoin d'être régénéré pour assurer la continuité des échanges, on inverse les rôles, par exemple en translatant les caloducs. Dans cette deuxième étape (2) le caloduc est placé dans les ambiances 2,3 pour le mettre en phase de régénération tandis que le caloduc (2) est mis en phase d'utilisation (Ph1) en l'amenant par une translation dans les ambiances 1, 2. Les ambiances 1 et 3 assurent des réactions opposées à celle de l'ambiance 2. Ainsi lorsque la réaction est endothermique dans l'ambiance 2 elle devient exothermique dans les ambiances 1 et 3 et vice versa.

La figure 19 représente la réalisation d'un caloduc chimique continu par l'utilisation de deux caloducs constitués et utilisés selon un des différents modes explicités ci-dessus.

Les deux caloducs (1, 2) sont disposés au-dessus d'un caisson (180) contenant, dans l'enceinte (181) l'ambiance 1 à refroidir.

Dans une première étape, le caloduc (1) disposé entre une enceinte (182) et une ambiance 2 produit du froid en (B) et évacue en (A) de la chaleur à l'ambiance extérieure 2 qui est à la température ordinaire.

Dans cette étape, la résistance électrique (17) n'est pas alimentée, le ventilateur (b) est en marche et l'orifice (1821) de communication de l'enceinte (182) avec l'enceinte (180) est ouvert pour faire circuler l'air de l'ambiance 1 tandis que le ventilateur (a) est arrêté et l'orifice (1820) de communication de l'enceinte (182) avec l'ambiance 2 est bouché.

Pendant ce temps le caloduc (2) placé entre une enceinte (183) et une ambiance extérieure 2 se régénère en alimentant en électricité la résistance (27) ce qui conduit à l'évacuation de la chaleur sur (B) dans l'enceinte (183). Cette évacuation de chaleur s'effectue par la mise en marche du ventilateur (d) qui met en communication par l'orifice (1830) l'enceinte (183) avec l'ambiance 2, tandis que le ventilateur (c) est arrêté et l'orifice (1831) qui met en communication l'enceinte (183), avec l'ambiance 1 de l'enceinte (181), est bouché.

Dans une deuxième étape le caloduc (1) se régénère en alimentant la résistance électrique (17) en courant, le ventilateur (b) étant arrêté et l'orifice (1821) bouché, le ventilateur (a) fonctionnant. Pendant cette deuxième étape, c'est le caloduc (2) qui produit du froid. Pour ce faire, le ventilateur (c) fonctionne, l'orifice (1831) est ouvert, le ventilateur (d) est arrêté et l'orifice (1830) est bouché. La chaleur est évacuée sur le compartiment (A) du caloduc (2) tandis que le compartiment (B) produit du froid.

Cet exemple de caloduc chimique continu n'est pas limité à la production de froid. On peut tout aussi bien envisager une utilisation des caloducs selon un des modes expliqués précédemment pour produire de la chaleur.

De plus le mode de réalisation du caloduc n'est pas limité à l'exemple décrit en liaison avec la figure 19 mais comprend également toute combinaison des modes de réalisation des échanges thermiques décrits en liaison avec les figures 1, 2, 3A à 3D.

D'autres modifications à la portée de l'homme de métier font également partie de l'esprit de l'invention.

**Revendications**

1 - Caloduc chimique caractérisé en ce qu'il comporte deux réactifs solides (A,B) susceptibles de donner lieu à une réaction réversible exothermique ou endothermique lorsqu'ils sont en présence de gaz, les solides étant mis en place dans un réservoir (1) unique séparé physiquement en deux compartiments (12,14) par un troisième solide (13) isolant thermiquement mais susceptible d'être traversé par le gaz, chacun des compartiments contenant un des deux réactifs solides.

2 - Caloduc chimique selon la revendication 1, caractérisé en ce que le réservoir (1) est tubulaire et comporte au niveau de chaque compartiment contenant chacun des deux solides, des moyens (10) permettant d'effectuer des échanges de chaleur.

3 - Caloduc chimique selon la revendication 2, caractérisé en ce que les moyens (10) sont des ailettes.

4 - Caloduc chimique selon la revendication 2, caractérisé en ce que les moyens (10) sont des tubes contenant le sel.

5 - Caloduc chimique selon la revendication 2, caractérisé en ce que les moyens (10) sont des résistances électriques.

6 - Caloduc chimique selon la revendication 2, caractérisé en ce que les moyens (10) sont des canalisations circulant au coeur du sel.

7 - Caloduc chimique selon la revendication 2, caractérisé en ce que les moyens (10) sont des brûleurs (20).

8 - Caloduc chimique selon la revendication 1 ou 2, caractérisé en ce qu'il comporte un robinet ou une vanne (11) mettant en communication les deux compartiments.

9 - Caloduc chimique selon la revendication 1 ou 2, caractérisé en ce qu'il comporte un circulateur (15).

10- Caloduc chimique selon la revendication 8 ou 9, caractérisé en ce que les réactifs solides (A,B) du caloduc déclenchent avec le gaz des processus physico-chimiques présentant dans le diagramme de clapeyron des courbes (a,b) qui se croisent dans le domaine des températures mises en oeuvre.

11- Caloduc chimique selon la revendication 8 ou 9, caractérisé en ce que les réactifs solides (A,B) déclenchent avec le gaz des processus physico-chimiques présentant dans le diagramme de clapeyron des courbes (a,b) parallèles dans le domaine de températures mis en oeuvre.

12- Caloduc chimique selon la revendication 10 ou 11, caractérisé en ce que les réactifs solides (A,B) sont constitués d'un mélange de sel pulvérulent avec un produit expansé bon conducteur thermique.

13- Caloduc chimique selon la revendication 12, caractérisé en ce que les réactifs solides (A,B) sont constitués d'un mélange de sel pulvérulent de granulométrie calibrée avec un produit expansé bon conducteur thermique et un deuxième produit expansé isolant thermiquement présent dans des proportions inférieures au premier produit expansé.

14- Procédé de régénération du caloduc selon une des revendications précédentes caractérisé en ce qu'il consiste à inverser les échanges thermiques.

15- Procédé de régénération selon la revendication 14, caractérisé en ce que l'inversion consiste en un retournement du caloduc.

16- Procédé de régénération selon la revendication 14, caractérisé en ce que l'inversion consiste en une translation de chaque compartiment de sel d'une ambiance vers une autre.

17- Procédé de régénération selon la revendication 14, caractérisé en ce que l'inversion consiste à commuter les ambiances à proximité de chaque compartiment.

18- Procédé de régénération du caloduc à circulateur selon une des revendications précédentes caractérisé en ce qu'il consiste à créer une dépression sur un des compartiments et une surpression sur l'autre compartiment.

19- Utilisation du caloduc selon une des revendications 1 à 14, caractérisé en ce qu'un compartiment contenant un premier mélange réactif (B) produisant dans une réaction endothermique une désorption de gaz est alimenté par une source de chaleur, le deuxième compartiment contenant un deuxième mélange réactif (A) produisant une réaction exothermique par absorption du gaz puis régénération par inversion des échanges thermiques.

20- Utilisation du caloduc selon une des revendications 1 à 14, caractérisé en ce qu'un compartiment contenant un premier mélange réactif (B) produit du froid par une réaction endothermique et un compartiment contenant un second mélange réactif effectue une réaction exothermique d'absorption de gaz à une température intermédiaire (Ti) puis régénération par inversion des échanges thermiques pour provoquer une réaction endothermique du second mélange solide réactif (A) alimenté à la température de source et une réaction exothermique du premier mélange solide réactif (B) avec évacuation à une température intermédiaire.

21- Utilisation selon une des revendications 1 à 13, caractérisé en ce qu'elle consiste consiste à produire pour des diagrammes à courbes croisées une réaction exothermique pour le second mélange solide réactif (A) alimenté à la température de source avec une réaction endothermique pour le premier mélange solide réactif (B) avec évacuation à température plus basse que la température de source et régénération par inversion des échanges thermiques pour provoquer une réaction exothermique par alimentation du premier mélange solide réactif (B) par la température de source et une réaction endothermique pour le second mélange solide réactif (A).

22- Utilisation du caloduc à courbes croisées selon une des revendications 1 à 13 caractérisée en ce qu'elle consiste à effectuer une réaction thermique par alimentation du second mélange solide (A) à une température de source inférieure à la température de croisement des droites et une réaction exothermique pour le premier mélange solide (B) à un niveau de température plus élevé et régénération par action endothermique par alimentation du premier mélange solide (B) à la température de source et réaction exothermique du second mélange solide (A) à une température plus basse que la température de source.

23- Utilisation du caloduc à courbes croisées selon une des revendications 1 à 13, caractérisée en ce qu'il consiste à produire une réaction endothermique par alimentation du second mélange solide (A) à une température de source supérieure à la température de croisement et une réaction exothermique du premier mélange solide (B) à une température inférieure à la température de source puis régénération par réaction endothermique du premier mélange solide (B) par alimentation de ce dernier à la température de source et évacuation à une température supérieure à la température de source par réaction exothermique du second mélange (A).

24- Utilisation du caloduc à courbes croisées selon une des revendications 1 à 13, caractérisé en ce qu'il consiste, dans une phase de régénération, à comprimer les compartiments contenant le sel (B) puis déprimer le compartiment contenant le sel (A) et, dans une phase d'utilisation, à faire absorber par le sel (A) le gaz dans une réaction exothermique à la température ordinaire (To) et faire désorber le gaz par le sel (B) dans une réaction endothermique pour produire du froid.

25- Utilisation du caloduc à courbes croisées, selon une des revendications 1 à 13, caractérisé en ce qu'il consiste, dans une phase de régénération à comprimer le compartiment contenant le sel (B) puis à déprimer le compartiment contenant le sel (A) et, dans une phase d'utilisation, à faire désorber le gaz par le sel (B) dans une réaction endothermique à la température ordinaire (To) et à faire absorber le gaz par le sel (A) dans une réaction exothermique à une température (Th) supérieure à la température ordinaire (To).

26- Utilisation du caloduc à courbes croisées, selon une des revendications 1 à 13, caractérisé en ce qu'il consiste dans une phase de régénération à déprimer le compartiment contenant le sel (B) et à comprimer le compartiment contenant le sel (A) puis, dans une phase d'utilisation, à faire désorber le sel (A) dans une réaction endothermique à la température ordinaire (To) et à faire absorber le sel (B) dans une réaction exothermique à une température (Te) d'évacuation inférieure à la température ordinaire (To).

27- Utilisation du caloduc à courbes croisées, selon une des revendications 1 à 13, caractérisé en ce qu'il consiste, dans une phase de régénération, à déprimer le compartiment contenant le sel (B) et à comprimer le compartiment contenant le sel (A) puis, dans une phase d'utilisation, à faire désorber le sel (B) dans une réaction endothermique à une température ordinaire (To) inférieure à la température de croisement (Tc) et à faire absorber le sel (A) dans une réaction exothermique à une température plus basse (Tb) inférieure à la température ordinaire (To).

28- Utilisation du caloduc à courbes croisées selon une des revendications 1 à 13, caractérisé en ce qu'il consiste, dans une phase de régénération à déprimer le compartiment contenant le sel (B) et à comprimer le compartiment contenant le sel (A) puis à faire absorber le sel (A) dans une réaction endothermique à une température ordinaire (To) supérieure à la température de croisement (Tc) des courbes et à faire désorber le sel dans une réaction exothermique à une température plus basse (Tb) inférieure à la température ordinaire (To).

29- Utilisation du caloduc à courbes croisées selon une des revendications 1 à 13, caractérisé en ce qu'il consiste, dans une phase de régénération à déprimer le compartiment contenant le sel (B) et à comprimer le compartiment contenant le sel (A) puis dans une phase d'utilisation à faire absorber le sel (B) dans une réaction exothermique à une température ordinaire (To) inférieure à la température de croisement (Tc) et à faire désorber le sel (A) dans une réaction endothermique pour produire du froid.

30- Utilisation du caloduc à courbes croisées selon une des revendications 1 à 13, caractérisé en ce qu'il consiste, dans une phase de régénération à comprimer le compartiment contenant le sel (B) et à déprimer le compartiment contenant le sel (A) puis dans une phase d'utilisation à faire désorber le sel (B) dans une réaction endothermique à une température ordinaire (To) supérieure à la température de croisement (Tc) et à faire absorber le sel (A) dans une réaction exothermique à une température plus élevée (Th) supérieure à la température ordinaire (To).

31- Utilisation du caloduc à courbes croisées selon une des revendications 1 à 13, caractérisé en ce qu'il consiste, dans une phase de régénération, à déprimer le compartiment contenant le sel (B) et à comprimer le compartiment contenant le sel (A) puis, dans une phase d'utilisation, à faire absorber le sel (B) dans une réaction exothermique à une température d'évacuation (Te) inférieure à la température de croisement et inférieure à la température ordinaire (To) et à faire désorber le sel (A) dans une réaction endothermique pour produire du froid.

32- Caloduc chimique continu consistant à utiliser au moins deux caloducs dont chacun d'eux est constitué d'un caloduc conforme à une des revendications 1 à 13 selon un mode d'utilisation d'une des revendications 19 à 31, caractérisé en ce que l'un des caloducs est employé dans la phase d'utilisation pendant que l'autre est employé dans la phase de régénération.

FIG_1

FIG_2

FIG_3

FIG.3A

FIG.3B

FIG.3C

FIG.3D

FIG_4

FIG_5

EP 0 336 816 A1

FIG_6

FIG_7

FIG_8

FIG_9

FIG_10

FIG.11

FIG.12

FIG _13

FIG _14

FIG_15

FIG_16

FIG_17

EP 0 336 816 A1

utilisation    régénération

Ambiance 1     Ambiance 2     Ambiance 3

Etape 1

| B | //// | A |   Ph1

| B | //// | A | 2

Ph2

| B | //// | A | 1

Etape 2

| B | //// | A | 2   Ph1

FIG_18

FIG_19

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 064 562 (SEKISUI KAGAKU KOGYO K.K.) <br> * Page 6, ligne 35 - page 13, ligne 25; page 24, lignes 10-29; figures 1-8,21 * | 1-3,14, 15,17, 19,20, 32 | F 28 D 15/02 <br> F 25 B 17/08 <br> B 01 J 8/02 |
| Y | | 4,6 | |
| A | | 8 | |
| | --- | | |
| Y | US-A-4 411 384 (DUNLAP) <br> * Colonne 1, ligne 42 - colonne 3, ligne 29; figures 1,2 * | 4,6 | |
| A | | 8,11 | |
| | --- | | |
| X | US-A-4 372 376 (NELSON et al.) <br> * Colonne 3, ligne 45 - colonne 4, ligne 4; colonne 4, ligne 41 - colonne 5, ligne 10; colonne 6, lignes 1-26; figures 1-5 * | 1,2,32 | |
| Y | | 3,5,6,7 | |
| A | | 4,8,11, 12,14, 17 | DOMAINES TECHNIQUES RECHERCHES (Int. Cl.4) |
| Y | US-A-4 169 362 (WEIL et al.) <br> * Colonne 2, ligne 34 - colonne 3, ligne 60; figures 1,2 * | 3 | F 28 D <br> F 25 B <br> B 01 J |
| A | | 4 | |
| | --- | | |
| Y | FR-A-2 376 371 (BRUNBERG et al.) <br> * Page 8, lignes 2-9; figure 3 * | 5,6 | |
| | --- -/- | | |

Le présent rapport a été établi pour toutes les revendications

| Lieu de la recherche | Date d'achèvement de la recherche | Examinateur |
|---|---|---|
| LA HAYE | 08-07-1989 | BELTZUNG F.C. |

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-2 470 356 (LE VERRE FLUORE SARL) * Page 3, ligne 22 - page 4, ligne 30; figure 1 * | 7 | |
| A | FR-A-2 470 356 | 14,17 | |
| A | US-A-4 039 023 (McLAINE) * Colonne 4, ligne 62 - colonne 6, ligne 46; figure 3 * | 1,9 | |
| A | EP-A-0 130 908 (S.N.E.A.) * Page 4, lignes 5-19; page 6, ligne 1 - page 7, ligne 22; page 7, lignes 36-39; figures 1-4 * | 1,2,9, 11,14, 18,19 | |
| A | EP-A-0 206 875 (S.N.E.A.) * Colonne 3, lignes 1-55; figures 1-4 * | 1,8,10, 21-31 | |
| A | EP-A-0 129 473 (S.N.E.A.) * Page 2, lignes 28-38 * | 1,10,12 | DOMAINES TECHNIQUES RECHERCHES (Int. Cl.4) |
| A | WO-A-8 202 590 (UNITED TECHNOLOGIES CORP.) * Page 7, ligne 2 - page 9, ligne 21 * | 1,2,8,9 | |
| A | US-A-4 365 475 (DUNLAP) * Colonne 1, ligne 56 - colonne 3, ligne 26; figures 1-4 * | 1,2,4,8 ,11,14, 17,19, 32 | |
| A | P.D. DUNN et al.: "Heat pipes", édition 3, 1982, pages 194-197, Pergamon Press, Oxford, GB * Page 195, paragraphe 5.8 - page 197 * | | |

Le présent rapport a été établi pour toutes les revendications

| Lieu de la recherche | Date d'achèvement de la recherche | Examinateur |
|---|---|---|
| LA HAYE | 08-07-1989 | BELTZUNG F.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................

& : membre de la même famille, document correspondant

EPO FORM 1503 03.82 (P0402)